(19) Europäisches Patentamt
European Patent Office
Office européen des brevets

(11) Veröffentlichungsnummer: **0 098 517**
**A1**

# (12) EUROPÄISCHE PATENTANMELDUNG

(21) Anmeldenummer: **83106333.4**

(22) Anmeldetag: **29.06.83**

(51) Int. Cl.³: **C 04 B 41/14**, C 25 B 11/00, C 25 B 1/04

(30) Priorität: **01.07.82 DE 3224555**

(43) Veröffentlichungstag der Anmeldung: **18.01.84**
**Patentblatt 84/3**

(84) Benannte Vertragsstaaten: **BE DE FR GB IT LU NL**

(71) Anmelder: **HOECHST AKTIENGESELLSCHAFT,**
**Postfach 80 03 20, D-6230 Frankfurt am Main 80 (DE)**

(72) Erfinder: **Wendt, Helmut, Prof. Dr., Forsthausstrasse 33, D-6110 Dieburg (DE)**
Erfinder: **Hofmann, Hans, Dr., Brentanostrasse 4, D-6052 Mühlheim (DE)**

## (54) Verfahren zum Herstellen von Cermet-Metall-Verbunden.

(57) Bei diesem Verfahren zum Herstellen von Cermet-Metall-Verbunden für korrosionsstabile, flexible Diaphragmen, Filter oder Elektroden-Diaphragmen-Konfigurationen wird aus einem Gemisch aus Oxiden der Erdalkali, der Alkali oder der Erdmetalle und amphoterer Oxide der Metalle der vierten, fünften oder sechsten Nebengruppe des Periodensystems und gegebenenfalls aus Metallen der vierten oder sechsten Nebengruppe des Periodensystems grüne Cermetrohlinge gefertigt. Auf diese wird ein- oder beidseitig eine Schicht aus Metallpulver aus Metallen der vierten, fünften oder sechsten Nebengruppe des Periodensystems oder eine vorgesinterte, poröse Metallplatte in einer Dicke von 0,2 bis 2 mm aufgebracht. Die so erhaltenen Rohlinge des Verbundes werden bei Temperaturen in der Nähe aber unterhalb der Schmelztemperatur der Metalle gesintert.

EP 0 098 517 A1

ACTORUM AG

Verfahren zum Herstellen von Cermet-Metall-Verbunden

Gegenstand der Erfindung ist ein Verfahren zum Herstellen von Cermet-Metall-Verbunden für korrosionsstabile, flexible Diaphragmen, Filter oder Elektroden-Diaphragmen-Konfigurationen.

Korrosionsstabile Diaphragmen und Filter aus mit Oxidkeramik beschichteten Metallnetzen sind aus Chemie-Ingenieur-Technik 52 (1980), Nr. 5, Seiten 438 bis 439 bekannt. Die Oxidkeramik besteht aus Mischoxiden von zweiwertigen Metallen der Erdalkalien und Übergangsmetallen sowie Metallen der vierten und fünften Nebengruppe des Periodensystems. Nachteilig bei diesen Diaphragmen und Filtern ist das schlechte Haften der Oxidkeramik auf dem Metallnetz. Ist die Keramikschicht beschädigt, bröckelt sie leicht vom Metallnetz ab. Darüberhinaus sind die Diaphragmen nicht flexibel sondern relativ spröde.

Es stellt sich demnach die Aufgabe, Cermet-Metall-Verbunde zu schaffen, die einen innigen Verbund zwischen Keramik und Metall aufweisen und bei verbesserter mechanischer Stabilität metallartige Flexibilität zeigen.

Die Aufgabe wird durch ein Verfahren zum Herstellen von Cermet-Metall-Verbunden gelöst, das dadurch gekennzeichnet ist, daß aus einem Gemisch aus Oxiden der Erdalkali-, der Alkali- oder Erdmetalle und amphoterer Oxide der Metalle der vierten, fünften oder sechsten Nebengruppe des Periodensystems und gegebenenfalls aus Metallen der vierten oder sechsten Nebengruppe des Periodensystems grüne Cermet-Rohlinge gefertigt werden, auf die einseitig oder beidseitig eine Schicht aus Metallpulver aus Metallen der vierten, fünften oder sechsten Nebengruppe des Periodensystems oder eine vorgesinterte, poröse Metallplatte in einer Dicke von 0,2 bis 2 mm aufgebracht und die so erhaltenen Rohlinge des Verbundes bei Temperaturen in der Nähe aber unterhalb der Schmelztemperatur der Metalle gesintert werden.

Im Gemisch können die Metalle der vierten oder sechsten Nebengruppe des Periodensystems in Mengen von 15 bis 75 Gew.-% enthalten sein. Der Verbund kann einen mittleren Porendurchmesser von 5 bis 50 µm aufweisen. Es kann von Vorteil sein, daß das Gemisch für die Cermet-Rohlinge Oxide der Erdalkalimetalle, der Metalle der vierten, fünften oder sechsten Nebengruppe und gegebenenfalls Metalle der vierten oder sechsten Nebengruppe des Periodensystems enthält. Das Gemisch kann auch Mischoxide, d.h. Verbindungen aus mehreren Oxiden, z.B. Doppel- oder Tripeloxide enthalten.

Einseitig oder beidseitig mit Metallschichten versehene Cermet-Metall-Verbunde können in Dicken von 10 µm an aufwärts hergestellt werden. Sie eignen sich zur Verwendung als mechanisch stabile korrosionsbeständige Filter mit hydrophilen Eigenschaften als korrosionsbeständiges Material für den Apparatebau sowie als Diaphragma - Elektrodenkonfiguration in abstandsfreier Anordnung. Im letztgenannten Sinne sind sie besonders geeignet für die Wasserelektrolyse und die Chloralkalielektrolyse.

Die Metallschichten auf dem Cermet können aus Sintermetall oder Metallschwamm bestehen.

Für die oxidkeramische Komponente des Cermets eigenen sich Verbindungen einerseits von Oxiden des Calciums, Bariums, Aluminiums oder Mischungen aus diesen Oxiden und andererseits von amphoteren Oxiden des Titans, Zirkons, Hafniums, Niobs, Tantals, Molybdäns und/oder Wolframs.

Als metallische Komponente des Cermets sowie für die Metallschicht eignen sich insbesondere Nickel, Titan oder Zirkon.

Aus den genannten Oxiden und Metallen werden gegebenenfalls nach gemeinsamen Vermahlen in einer Kugelmühle Pulvermischungen hergestellt, die zu Pasten, Emulsionen oder plastischen Massen mit Wasser, Lösungsmitteln oder anderen geeigneten organischen Substanzen, die ohne Zerstörung der Rohlinge verflüchtigbar oder abbaubar sind, angeteigt. Diese angeteigten Massen werden in geeigneter Weise, etwa durch Tischziehen, Kalandern, Siebdrucken oder im Doctor-Blade-Verfahren zu grünen Cermet-Rohlingen verarbeitet. Selbstverständlich können die Komponenten des Cermets auch einzeln gemahlen und in gesiebten Fraktionen zusammengestellt und gemischt werden, sodaß besonderen Anforderungen an Leervolumen, Porendurchmesser und Mikrostruktur sowie mechanischer Festigkeit und Flexibilität des Cermets Rechnung getragen werden kann. Die Cermet-Rohlinge werden ein- oder beidseitig mit einer Metallschicht versehen und anschließend aufgeheizt, um das Bindemittel zu verflüchtigen oder auszubrennen. Der Rohling wird dann bei Temperaturen unterhalb des Schmelzpunktes der metallischen Komponente gegebenenfalls unter reduzierender oder inerter Atmosphäre ($CO$, $H_2$ oder $N_2$) zum Verbund gesintert.

0098517

Beispiel

Eine Mischung aus 50 Gew.-% Nickelpulver und 50 Gew.-% Nickeltitanat mit einer mittleren Korngröße von 5 µm wurde bei 1100°C 4 Stunden gesintert. Der gesinterte Scherben wurde zerkleinert und in einer Kugelmühle gemahlen. Das Mahlgut wurde durch Sieben in verschiedene Fraktionen getrennt, und zwar in Fraktionen mit Korngrößen ≤ 5 µm, ≤ 20 µm und ≤ 50µm. Aus diesen drei Fraktionen wurden die folgenden Mischungen für drei Proben a), b), c) hergestellt:

| Korngröße: | a) | b) | c) |
|---|---|---|---|
| ≤ 5 µm | 100 Gew.-% | 60 Gew.-% | 50 Gew.-% |
| ≤ 20 µm | - | 40 Gew.-% | 30 Gew.-% |
| ≤ 50 µm | - | - | 20 Gew.-% |

Aus den Proben a) und b) wurde durch Mischen mit einer 2%igen Rohrzuckerlösung eine Paste angeteigt und aus Probe a) durch Tischziehen eine 200 µm dicke Schicht hergestellt. Auf diese Schicht wurde Nickeloxid in einer Dicke von 0,2 mm aufgedruckt. Nach Trocknen des "grünen" Verbundes und thermischem Zersetzen des Binders wurde dieser bei ca.1100°C für 45 Minuten unter einer $H_2/N_2$ Atmosphäre gesintert, bei der das Verhältnis $H_2:N_2$ gleich 60:40 war.

Die Probe b) wurde auf eine 0,3 mm dicke Sintertitanplatte in einer Stärke von 0,2 mm aufgedruckt. Der "grüne" Verbund wurde weiter behandelt wie Probe a).

Die Probe c) wurde mit einer 3 %igen Gummi Arabicum Lösung angeteigt und eine 220 µm dicke Schicht nach dem Doctor-Blade-Verfahren hergestellt. Auf die Schicht auf Oxidkeramik wurde Metallpulver in einer 2 mm dicken Schicht aufgebracht. Nach Trocknen des "grünen" Verbundes und thermischem Zersetzen des Binders wurde bei ca. 1250°C in $H_2/N_2$ Atmosphäre gesintert. Das Verhältnis $H_2:N_2$ betrug 40:60.

Patentansprüche:

1. Verfahren zum Herstellen von Cermet-Metall-Verbunden, dadurch gekennzeichnet, daß aus einem Gemisch aus Oxiden der Erdalkali, der Alkali oder der Erdmetalle und amphoterer Oxide der Metalle der vierten, fünften oder sechsten Nebengruppe des Periodensystems und gegebenenfalls aus Metallen der vierten oder sechsten Nebengruppe des Periodensystems oder Nickel grüne Cermetrohlinge gefertigt werden, auf die einseitig oder beidseitig eine Schicht aus Metallpulver aus Metallen der vierten, fünften oder sechsten Nebengruppe des Periodensystems oder Nickel oder eine vorgesinterte, poröse Metallplatte in einer Dicke von 0,2 bis 2 mm aufgebracht und die so erhaltenen Rohlinge des Verbundes bei Temperaturen in der Nähe aber unterhalb der Schmelztemperatur der Metalle gesintert werden.

2. Verfahren nach Anspruch 1, dadurch gekennzeichnet, daß im Gemisch die Metalle der vierten oder sechsten Nebengruppe des Periodensystems in Mengen von 15 bis 75 Gew.-% enthalten sind.

3. Verfahren nach Anspruch 1, dadurch gekennzeichnet, daß der Verbund einen mittleren Porendurchmesser von 5 bis 50 µm aufweist.

4. Verfahren nach Anspruch 1, dadurch gekennzeichnet, daß das Gemisch für die Cermet-Rohlinge Oxide der Erdalkalimetalle, der Metalle der vierten, fünften oder sechsten Nebengruppe und gegebenenfalls Metalle der vierten oder sechsten Nebengruppe des Periodensystems enthält.

Europäisches Patentamt

**EUROPÄISCHER RECHERCHENBERICHT**

0098517

Nummer der Anmeldung

EP 83 10 6333

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | IBM TECHNICAL DISCLOSURE BULLETIN, Band 12, Nr. 11, April 1970, Seite 1795, New York, USA D.A. CHANCE: "Green ceramic metallization" * Insgesamt * | 1-4 | C 04 B 41/14<br>C 25 B 11/00<br>C 25 B 1/04 |
| Y | FR-A-2 215 268 (ELECTRONOR CORP.) * Ansprüche 1-7,24,28 * | 1-4 | |
| Y | FR-A-2 421 156 (COMMISSARIAT A L'ENERGIE ATOMIC) * Ansprüche 1-4 * | 1-4 | |
| Y | DE-A-2 924 292 (NGK INSULATORS LTD.) * Ansprüche 1,2 * | 1 | RECHERCHIERTE SACHGEBIETE (Int. Cl. 3) |
| A | FR-A-1 513 898 (BROWN, BOVERI & CIE.) * Ansprüche 1-6 * | 1 | C 04 B<br>C 25 B<br>C 23 C |
| A | DE-A-1 952 155 (BROWN, BOVERI & CIE.) * Anspruch 1 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 05-10-1983 | STANGE R.L.H |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82